# EUROPEAN PATENT SPECIFICATION

(11) **EP 2 290 401 B1**
(45) Date of publication and mention of the grant of the patent: **15.08.2018**
(21) Application number: 10166934.9
(22) Date of filing: 22.06.2010
(51) Int. Cl.: G01S 17/10, G01S 17/02

(54) **Ultra-stable short pulse remote sensor**
Ultrastabiler Kurzimpuls-Fernsensor
Capteur à distance d'impulsion courte ultra-stable

(30) Priority: 24.08.2009 US 546371
(43) Date of publication of application: 02.03.2011
(73) Proprietor: Raytheon Company, Waltham, MA 02451-1449 (US)
(72) Inventor: Wilkinson, Steven R., Stevenson Ranch, CA 91381 (US); Clatterbuck, Todd O., Playa Vista, CA 90094 (US); Nelson, Thomas A., Albuquerque, NM 87111 (US)
(74) Representative: Dentons UK and Middle East LLP

(56) References cited:
- WO-A1-2010/010437
- US-A1- 2005 185 188
- US-A1- 2008 140 341

## Description

### BACKGROUND

Conventional pulsed laser remote sensors perform over short distances on the order of 1 km or less. Further, they typically require high power and implement incoherent direct detection methods. In contrast, conventional coherent pulsed laser sensors interfere a scattered pulse reflected from a target with a portion of the emitted pulse which was transmitted by the laser at an earlier time. A laser having extremely narrow frequency linewidths and a coherence length of at least twice as long as the operating range of the sensor must be used to ensure interference of the scattered pulse and the emitted pulse.

In order to use temporally short pulses for coherent detection, the center frequency of the laser must be stabilized to increase its coherence length. In practice, this is complex and difficult since free running ultrafast laser systems typically have a coherence length of a single pulse duration. Thus, conventional coherent pulsed laser sensors must use a delay line equal to the round trip time-of-flight because it is necessary to interfere the scattered pulse with the same emitted pulse which produced the scattered pulse.

As a result, a low power coherent pulsed laser remote sensor having a long coherence time is desired in order to sense targets at long ranges. Further, it is desired that the laser sensor utilize amplitude and phase information contained in radiation pulses scattered by the targets to determine unique target signatures.

US 2008/140341 A1 discloses methods and apparatus for three-dimensional imaging of a sample. A source is provided of a beam of substantially collimated light characterized by a temporally dependent spectrum. The beam is focused in a plane characterized by a fixed displacement along the propagation axis of the beam, and scattered light from the sample is superposed with a reference beam derived from the substantially collimated source onto a focal plane detector array to provide an interference signal. A forward scattering model is derived relating measured data to structure of an object to allow solution of an inverse scattering problem based upon the interference signal so that a three-dimensional structure of the sample may be inferred in near real time.

US 2005/185188 A1 discloses quantum resonance fluorescent microscope systems for detecting component substances in a specimen. The systems are based on exciting the sample containing the material with a femtosecond to nanosecond probe pulse of collimated light, which is tailored to optimize detection of a given material by separating the probe pulse into component features of frequency, polarization, phase and/or amplitude. The component features are independently shaped and formed into a composite pulse selected to optimize a signature response pulse received from the material. In some cases, two independently re-shaped pulses are combined, where one re-shaped pulse has two mixed polarization states and the other re-shaped pulse is linearly polarized. These two pulses are made to intersect at an angle of 90 degrees so that the combined pulse has electric field in each of the XYZ axes.

WO 2010/010437 A1 discloses a Fourier transform spectrometer comprising: a coherent light source; an interferometer adapted to separate the coherent light source into two or more parts in order to generate through frequency- or phase-induced effects, interferences between the two or more parts; detection means adapted to detect the interferences, wherein the coherent light source comprises a frequency comb generator having a frequency repetition rate, and the detection means are adapted to detect the beating of pairs of frequencies of the frequency comb separated by the frequency repetition rate or a multiple of the frequency repetition rate.

### SUMMARY

The invention is defined by the features of claims 1 and 6. Further embodiments are defined by the dependent claims.

According to various embodiments, an ultra-stable short pulse remote sensor having extended temporal coherence for long range environmental sensing, surveillance, and reconnaissance is disclosed. In particular, the sensor determines unique target signatures after an ultrashort pulse has interacted with a target at range by measuring the spectral amplitude and phase of the scattered pulse. As a result, the ultra-stable short pulse remote sensor improves over conventional optical remote sensors by achieving coherent detection of targets with reduced power and at long range, e.g., megameter ranges. Further, the ultra-stable short pulse sensor can be implemented in a small and lightweight system using commercially available technology.

In an embodiment, a receiver is configured to detect ultrashort multispectral pulses of radiation scattered by a target, the receiver comprising a detector configured to detect scattered radiation pulses produced by scattering of emitted radiation pulses by the target; an interferometer configured to interfere the scattered pulses with a reference pulse, wherein the emitted pulses and the reference pulse are different radiation pulses in a series of pulses; and a processor configured to determine an intensity and a phase of the scattered pulses based on the interference of the scattered pulses with the reference pulse.

In a further embodiment, a method of detecting ultrashort multispectral pulses of radiation scattered by a target includes generating a series of coherent radiation pulses; selecting reference radiation pulses from the series of pulses; emitting radiation pulses from the series of pulses, wherein the reference pulses and the emitted pulses are different pulses; receiving scattered radiation pulses produced by scattering of the emitted pulses by the target; interfering the scattered pulses with the reference pulses; and determining an intensity and a phase of the scattered pulses based on the interference.

In a further embodiment, a system is configured to emit and receive ultrashort multispectral pulses of radiation, the system comprising a source configured to generate a series of radiation pulses including reference radiation pulses and emitted radiation pulses produced by scattering of the emitted radiation pulses by a target; a receiver configured to receive scattered radiation pulses produced by scattering of the emitted radiation pulses by a target; an interferometer configured to interfere the scattered pulses with reference pulses; and a processor configured to determine an intensity and a phase of the scattered pulses based on an output of the interferometer.

These and other features and advantages of the novel and non-obvious system and method will be apparent from this disclosure. It is to be understood that the summary, drawing, and detailed description are not restrictive of the scope of the inventive concept described herein.

### BRIEF DESCRIPTION OF THE DRAWINGS

Figure 1 shows the conceptual operation of the laser sensor;
Figure 2 shows oscillator pulse trains comprising an example pulse n₀ and a second example pulse n₀+n;
Figure 3 compares coherent and incoherent interferograms;
Figure 4 shows the spectrogram of a conventional reference pulse as function of delay and wavelength (public domain information provided by Rick Terbino, Georgia Institute of Technology);
Figure 5 shows the intensity and phase of the conventional reference pulse of Figure 4 as a function of time (public domain information provided by Rick Terbino, Georgia Institute of Technology);
Figure 6 shows experimental results of a conventional spectrum of an interferogram as a function of wavelength;
Figure 7 shows a signature corresponding to a first target;
Figure 8 shows a signature corresponding to a second target;
Figure 9 shows an ultrastable short pulse remote sensor based on an ultrafast laser with extended temporal coherence according to an embodiment;
Figure 10 shows an ultrafast laser source according to an embodiment;
Figure 11A shows a conventional pulse train in the time-domain;
Figure 11B shows the conventional pulse train having pulses with different phases;
Figure 11C shows the conventional pulse train in the frequency domain;
Figure 12 shows a conventional ultra-wideband supercontinuum pulse;
Figure 13 shows a receiver according to an embodiment; and
Figure 14 shows an interferogram.

### DETAILED DESCRIPTION

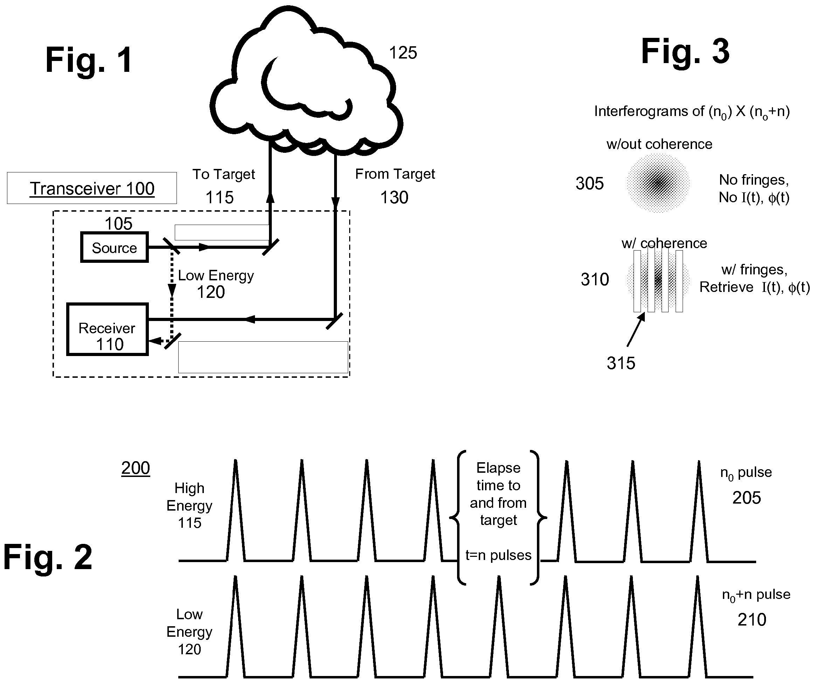

Figure 1 shows an exemplary ultrafast laser transceiver 100 with extended temporal coherence. Transceiver 100 comprises temporally stabilized laser source 105 and receiver 110. Source 105 emits a radiation beam comprising a train of ultrafast source pulses at a well defined repetition frequency.

In an embodiment, the pulses emitted from source 105 are split into a beam of high-energy pulses 115 and a beam of low-energy reference pulses 120. High-energy pulses 115 are launched toward target 125 and interact with target 125. Scattered radiation pulses 130 are reflected back to receiver 110 due to scattering of high-energy pulses 115 by target 125.

Low-energy reference pulses 120 are coupled directly from source 105 to receiver 110. Receiver 110 coherently combines low-energy pulses 120 and scattered pulses 130 to produce a signal for output or further processing. In particular, the optical information contained in scattered pulses 130 may be measured by determining the differences between scattered pulses 130 and low-energy reference pulses 120. Such analysis of scattered pulses 130 permits, e.g., discovery, detection, recognition, and/or verification of target 125. The range of transceiver 100, however, may be limited due to instability of reference pulses 120 with respect to time, and the greater time-of-flight required for pulses 115 and 130 to reach more distant targets 125.

Figure 2 shows exemplary pulse trains 200 for the beam of high-energy pulses 115 and the beam of low-energy reference pulses 120. While the sensor is not limited to single pulse detection, the discussion of the sensor operation may address two representative pulses for ease of
understanding. In particular, scattered pulses 130 comprises pulse n₀ 205 which has been time delayed relative to reference pulses 120. The time delay results due to the time-of-flight required for pulses 115 and 130 to reflect from target 125. Pulse n₀ 205 is caused to interfere with pulse n₀+n 210, which may be sampled directly from laser source 105 and provided by reference beam 120. In an embodiment, n is a large number of pulses emitted from source 105 during the time delay of pulse n₀ 205, e.g., tens, hundreds, thousands, or millions of pulses.

In one or more embodiments, a conventional delay line is not required. Conventional delay lines were necessary in previous devices due to the short coherence time of conventional laser sources which caused radiation pulses to lose coherency with subsequent pulses emitted after the coherence time. Therefore, without a conventional delay line, the coherency between a scattered pulse and a subsequent (i.e., reference) pulse would be lost by the time the scattered pulse returned from the target. As a result, conventional delay lines were provided to enable both scattered pulses 130 and the reference pulse 120 from the same source pulse 105 to be interfered. Accordingly, it was necessary to match the delay of the conventional delay line to the time-of-flight for a pulse to reach the target and to return from the target. In contrast, according to an embodiment, scattered pulse n₀ 205 can be interfered, e.g., with subsequent reference pulse n₀+n 210, since reference pulses 120 remain coherent for an extended period of time.

Figure 3 shows the detecting of frequency information associated with scattered pulses 130 by non-linearly mixing scattered pulses 130 and reference pulses 120. In particular, interferograms 305 and 310 may be produced by interference between pulse n₀ 205 and pulse n₀+n 210 and contains the optical information of pulse n₀ 205. In order to produce a reliable signal, pulse n₀ 205 must be coherent with pulse n₀+n 210, such that the interferogram 310 is modulated with a wavelength dependant fringe pattern 315.

In contrast, if pulse n₀ 205 and pulse n₀+n 210 are not coherent, e.g., as in a free-running oscillator, no fringe pattern is observed, as shown by interferogram 305. Furthermore, it is not possible to detect and compensate for instantaneous intensity fluctuations in source 105. Therefore, intensity I(t) and phase ø(t) information cannot be determined. The length of time that pulse n₀ 205 can be coherently maintained with respect to pulse n₀+n 210 limits the range to which transceiver 100 can detect target 125. Typically, conventional ultrafast lasers which operate with high repetition rates in excess of tens of MHz have short temporal coherence.

However, it is possible to increase the range of transceiver 100 by increasing the temporal coherence of source 105 so that pulse n₀ 205 remains coherent with pulse n₀+n 210 over multiple pulses. In an embodiment, source 105 may have long term temporal stability in excess of 100 seconds. Further, such long term temporal stability enables interferogram 310 to use a multi-pulse exposure to improve the signal-to-noise ratio. For example, a one second exposure (i.e., only 1% of temporal coherence of source 105) allows interferogram 310 to be constructed from over a million pulses.

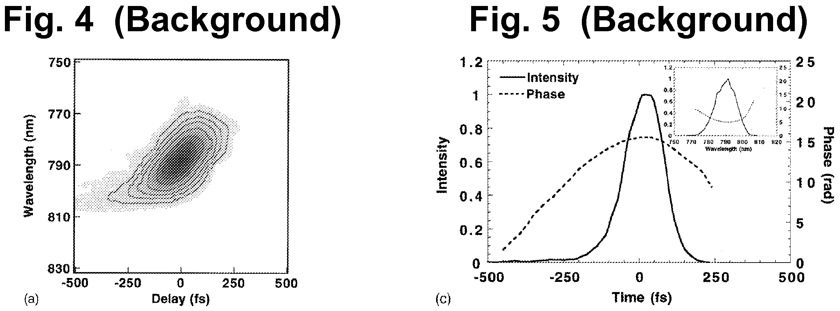

Figures 4 and 5 show alternative conventional characterizations of reference pulse 120. In particular, Figure 4 shows the intensity of reference pulse 120 as a function of delay and wavelength. Further, Figure 5 shows the intensity and phase of reference pulse 120 as a function of delay. By accurately characterizing reference pulse 120, it is possible to determine the signature of target 125 from scattered pulses 130. In an embodiment, target 125 can be classified and/or identified by comparing the target signature to a database of target signatures.

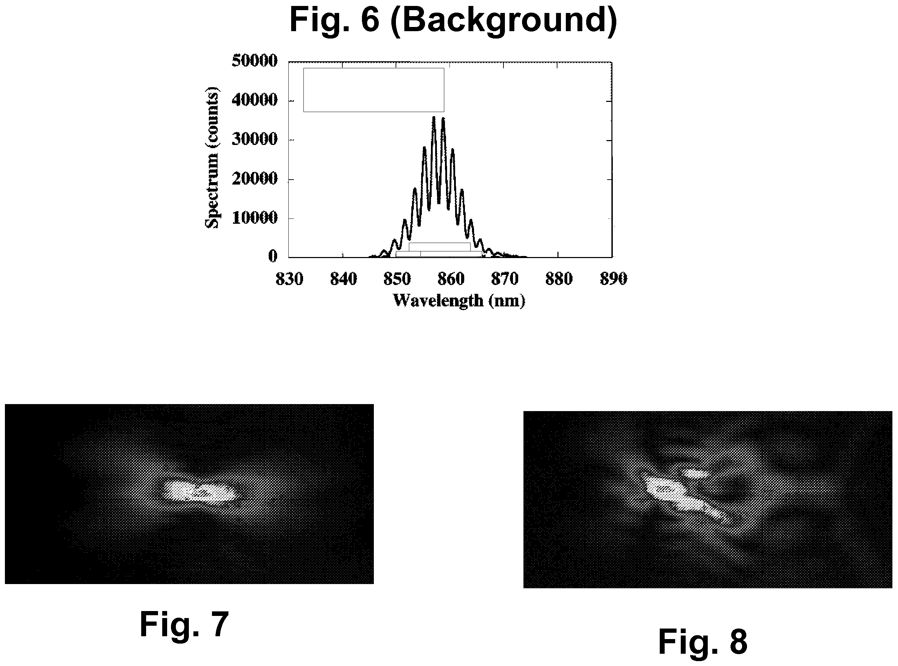

Figure 6 shows the spectrum of exemplary interferogram 310 (see Figure 3) produced by the interference of reference pulse 120 with scattered pulses 130. In particular, fringes 315 indicate the interference between reference pulse 120 with scattered pulses 130 caused by coherence between the pulses.

Figure 7 shows an exemplary pulse spectrograph of a scattered pulse corresponding to a first target, i.e. a first mirror. Additionally, Figure 8 shows an exemplary pulse spectrograph of a scattered pulse corresponding to a second target, i.e. a second mirror. As can be seen, each mirror interacts with the reference pulse in an unique manner, thus producing distinct signatures corresponding to a respective mirror.

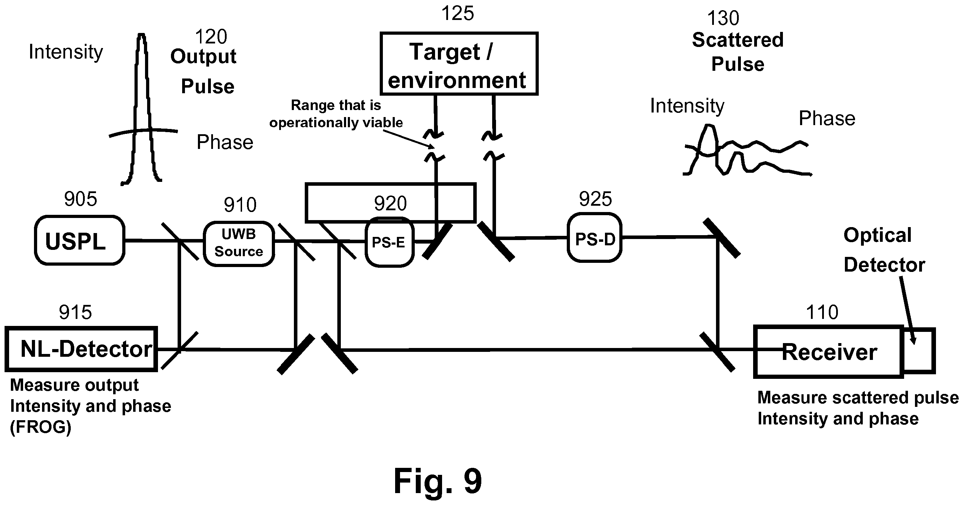

Figure 9 shows a remote sensing system according to an embodiment. Ultra-stable pulse laser (USPL) 905 generates a pulse train of ultrashort laser pulses having a wavelength, e.g. between 400 nm and 10,000 nm. In various embodiments, the pulse train can have a repetition rate on the order of 0.1 to 10 GHz, and the duration of each pulse can be on the order of several femtoseconds. Further, laser 905 is capable of extended temporal coherence such that the pulses in the pulse train are coherent with one another for an extended time period.

Ultra-wideband (UWB) source 910 converts the pulses produced by laser 905 to a supercontinuum of pulses having broad multispectral bandwidth, e.g. up to 500 THz. The pulses are characterized by non-linear (NL) detector 915 either before or after being provided to UWB source 910. An exemplary reference pulse 120 is shown having an intensity and phase which is representative of each of the other pulses in the pulse train.

Pulse shaping encoder (PS-E) 920 shapes the pulses for performance, e.g. in a military environment, and may have adaptive capabilities. In various embodiments, PS-E 920 can be configured as a liquid crystal spatial light modulator to adjust amplitude and phase of the individual spectral components. The pulses reflect from target 125 and pulse shaping decoder (PS-D) 925 recovers scattered pulses 130 from the signal received from target 125. The intensity and phase of an exemplary scattered pulses 130 are shown. Receiver 110 interferes reference pulse 120 with scattered pulses 130 in order to recover the signature of target 125.

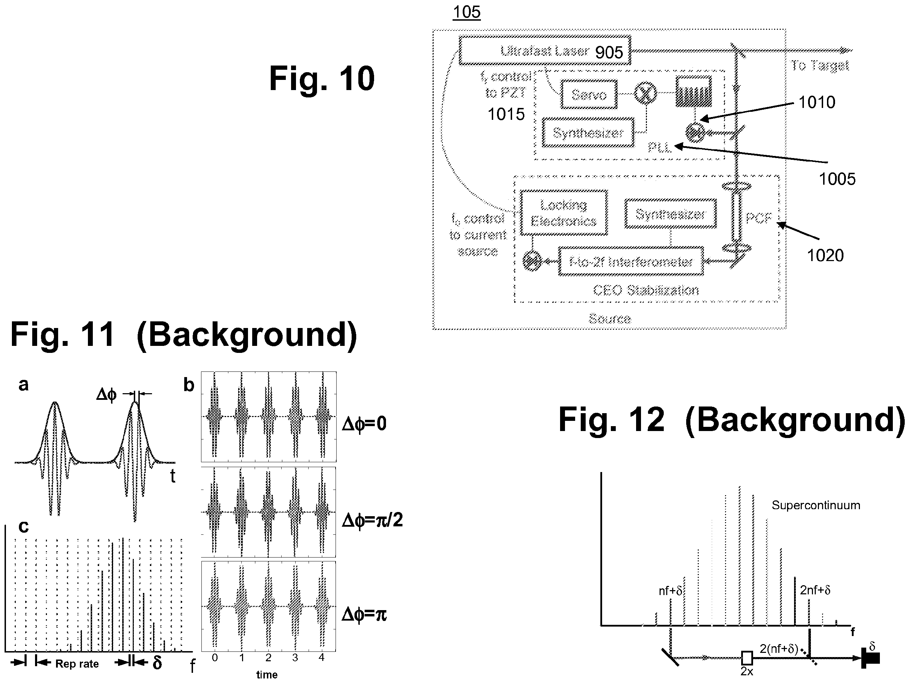

Fig. 10 shows laser source 105 according to an embodiment which comprises two stabilizing mechanisms. Source 105 comprises ultrashort pulsed or "ultrafast" laser (USPL) 905 with both repetition rate and carrier-envelop offset (CEO) stabilizations. One requirement of laser 905 comes from the CEO stabilization, which generally benefits from an octave of spectral width. This octave of spectral width can either be inherently designed into the laser or can be created through a process such as supercontinuum generation. Supercontinuum generation is a nonlinear phenomenon where the interaction of an ultrafast laser with, but not limited to, photonic crystal fiber (PCF) broadens the fundamental laser spectrum into a UWBW laser spectrum. If supercontinuum generation is used to meet the CEO stabilization criteria, the laser spectrum can be configured to be above 0.2 µm and below 2 µm.

In an embodiment, the repetition rate of laser 905 may be fixed relative to an ultra-stable RF source. A fixed laser repetition rate results from stabilizing the cavity length. The cavity length may be stabilized via a feedback process using phase-locked loop (PLL) 1005. PLL 1005 detects a small portion of the output of laser 905 by fast photodiode 1010 (rise time ∼1 ns). PLL 1005 compares the cavity repetition frequency with that of the RF source. An error signal is generated which adjusts piezo-electric transducer 1015 (PZT) on the end mirror of the cavity.

Having fixed the repetition rate, the carrier-envelop offset (CEO) may be stabilized. CEO describes the actual phase of the carrier wavelength inside the pulse envelope. For most pulsed laser applications, the group velocity (how the pulse envelope propagates) and the phase velocity (how the phase of the spectral components propagate) are different. This difference results in a "slip" in the carrier phase within the pulse envelope and limits the temporal coherence of laser 905. In an embodiment, locking the CEO permits measurement of scattered beam 130 using pulse n₀ 205 and pulse n₀+n 210.

CEO may be stabilized using, e.g., f-to-2f interferometry, which requires laser 905 to have at least an octave of spectral width. In particular, PCF 1020 samples a fraction of the output of laser 905, which generates a supercontinuum spectrum. Next, a portion of the supercontinuum may be frequency doubled and heterodyned with the remaining supercontinuum. By selecting only wavelengths which are present in both spectra via a bandpass filter, a heterodyne signal is created which describes the CEO. This signal may be stabilized against a second RF source or an atomic standard, such as a Cs clock, in a similar matter as with PLL 1005. The generated error signal is, in turn, is provided as feedback to the current control on laser 905. By changing the current to laser 905, the CEO can be varied. Accordingly, source 105 has long-term stability in excess of 100 seconds, which exceeds the stability require for the receiver.

Figures 11A and 11C show the correspondence between the time and frequency domain, respectively, for a conventional pulse train. In particular, Figure 11A shows the carrier-envelope, and Figure 11C shows the frequency comb of the pulse train. Further, Figure 11B shows the conventional pulse train comprising pulses having different phases, thus destroying the temporal coherence between the pulses in the train. Temporal stabilization of the pulse-repetition rate and carrier-envelop reduces the linewidth of each frequency to sub-hertz values. As a result, the coherence length of the laser can be extended since the coherence length is determined by the linewidth of the individual frequency components.

Figure 12 shows an exemplary pulse having a broad multispectral supercontinuum which can be generated, for example, by UWB source 910.

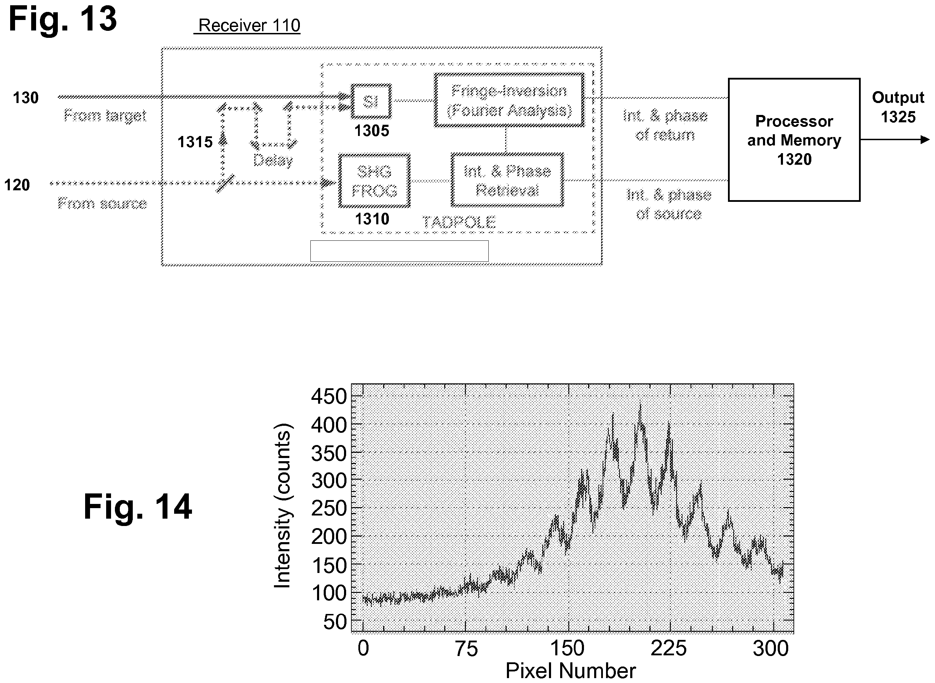

Figure 13 shows a highly sensitive receiver 110 based on an optical retrieval process which greatly reduces the required return energy in the scattered beam 130. Receiver 110 combines frequency resolved optical gating (FROG) 1310 with spectral interferometry (SI) 1305 in a technique called TADPOLE (Temporal Analysis by Dispersing a Pair of Light E-fields). Further, receiver 110 can also implement POLLIWOG (POLarization Labeled Interference versus Wavelength of Only a Glint), a modification of TADPOLE, which enables recovery of polarization information from pulses 130. See, e.g., U.S. Patent No. 5,530,544 and 5,936,732.

Scattered pulses 130 and reference pulse 120 collinearly propagate toward SI device 1305. The spectrum of the resulting interference pattern between scattered pulses 130 and reference pulse 120 is measured using a spectrometer. The signal from the spectrometer, called an interferogram, comprises a fringe pattern which varies as a function of wavelength. Since the interference process requires temporal overlap of both pulse 120 and 130, delay 1315 is provided to ensure that pulses 120 and 130 arrive simultaneously at SI device 1305. In an embodiment, two different pulses 120 and 130 separated by a time delay can be caused to interfere, thus enabling the detection of distant target 125. Delay 1315 is different than conventional delay lines selected based upon the target range, as discussed above. In particular, delay 1315 is selected to align scattered pulses 130 with a subsequent reference pulse 120, and is not based on time-of-flight of a pulse or target distance. In an embodiment, delay 1315 may provide a delay less than or equal to the period of train of pulses.

To acquire the optical information of scattered pulses 130, laser source 105 can be initially characterized. Standard FROG device 1310 performs the initial characterization of source 105 using reference pulses 120, and provides the amplitude and phase information specific to laser source 105. Once the optical information of source 105 is known, receiver 110 can decode the fringe pattern in the interferogram in order to retrieve the optical information of scattered pulses 130. It is not necessary, however, to perform the initial characterization on each pulse exiting laser 105 since the retrieved optical information describing laser source 105 is valid for extended time periods due to the long term stability and coherence time of source 105. Accordingly, the optical information in scattered beam 130 can be retrieved. Further, by reducing pulse energy requirements, source 105 can be simply an oscillator or an oscillator with a small amplification stage. As a result, source 105 does not require the additional complexity of high power amplification techniques, e.g., a chirp pulsed amplifier.

Processor and memory 1320 may determine a target signature based on the intensity and phase of scattered pulses 130. Further, processor and memory 1320 can be configured to compare the target signature to a database of target signatures, thus enabling target 125 to be classified and/or identified.

Figure 14 shows experimental results of an interferogram from the temporal overlap of two time delayed pulses, i.e., the n^{th} and n^{th}+4 pulses. For this example, the laser transmitter was both repetition-rate and CEO stabilized. The time delay of four pulses corresponds to 50 ns (i.e., a distance of 15 m) since the laser source 105 runs at 80 MHz. The fringe contrast in Figure 14 is excellent with modulation depth of 50%. This fringe contrast verifies that these pulse are mutually coherent, and thus confirms the suitability of using time delayed pulses for long range surveillance and reconnaissance.

As a non-limiting example, an embodiment of this disclosure may include a receiver configured to detect ultrashort multispectral pulses of radiation scattered by a target. The receiver may comprise: a detector configured to detect scattered radiation pulses produced by scattering of emitted radiation pulses by the target; an interferometer configured to interfere the scattered pulses with reference pulses, wherein the emitted pulses and the reference pulse are different radiation pulses in a series of pulses; and a processor configured to determine an intensity and a phase of the scattered pulses based on the interference of the scattered pulses with the reference pulses.

In some such embodiments, the receiver may further comprise a delay configured to delay the reference pulses by less than or equal to a period of the series of pulses, wherein the delayed reference pulses are interfered with the scattered pulses. In some embodiments, the emitted pulses of the receiver are polarized, and the processor is further configured to detect polarization information contained within the scattered pulses. In some embodiments, the emitted pulses are shaped by a pulse shaping encoder. In some embodiments, the processor is further configured to determine a target signature based on the intensity and phase of the scattered pulses.

## Claims

1. A method of detecting ultrashort multi-spectral pulses of radiation scattered by a target, the method comprising:
- generating a pulse train (200) of coherent radiation pulses (115, 120), wherein the pulse train of coherent radiation pulses is used to generate reference pulses and emitted pulses;
- directing one or more of the emitted pulses to a target (125);
- receiving scattered radiation pulses (130) produced by scattering of the emitted pulses by the target; and
- interfering each scattered radiation pulse with one of the reference pulses (120) to form an interferogram having a fringe pattern; and
- **characterised in that** the coherent radiation pulses are generated by a laser (905) having a spectral width of at least an octave; and
- the one of the reference pulses used to form an interferogram and the emitted pulse used to produce the scattered radiation pulse used to form that interferogram were generated using different radiation pulses within the pulse train of coherent radiation pulses; and
- determining an intensity and a phase of the scattered radiation pulses from the fringe patterns of the interferogram;
- determining a target signature based on the intensity and phase of the scattered radiation pulses;
- comparing the target signature to a database of target signatures; and
- classifying the target based on the comparison of the target signature to the database of target signatures.

2. The method of claim 1, **characterised in that** it further comprises delaying the reference pulses by less than or equal to a period of the pulse train before interfering the scattered pulses with the reference pulses.

3. The method of claim 1, **characterised in that** the emitted pulses are ultra-wideband laser pulses of radiation.

4. The method of claim 1, **characterised in that** it further comprises detecting polarization information contained within the scattered radiation pulses.

5. The method of claim 1, **characterised in that** the emitting includes shaping one or more emitted pulses with a pulse shaping encoder.

6. A system (100) configured to emit and receive ultra-short multi-spectral pulses of radiation, the system comprising:
- a source (105) configured to generate a pulse train (200) of coherent radiation pulses (115, 120);
- a receiver (110) configured to receive scattered radiation pulses (130) produced by scattering of the radiation pulses by a target (125); and
- an interferometer configured to interfere each scattered radiation pulse with a reference pulse (120) to form an interferogram having a fringe pattern; and
- **characterised in that** the source (105) comprises a laser (905) having a spectral width of at least an octave; and
- the reference pulse used to form an interferogram and the scattered radiation pulse used to form that interferogram are generated using different radiation pulses within the pulse train; and
- a processor configured to determine an intensity and a phase of the scattered pulses from the fringe pattern of the interferogram;
- to determine a target signature based on the intensity and phase of the scattered pulses;
- to compare the target signature to a database of target signatures; and
- to classify the target based on the comparison of the target signature to the database of target signatures.

7. The system of claim 6, **characterised in that** it further comprises a delay configured to delay the reference pulses by less than or equal to a period of the pulse train, wherein the delayed reference pulses are interfered with the scattered radiation pulses.

8. The system of claim 6, **characterised in that** the emitted radiation pulses are ultra-wideband laser pulses.

9. The system of claim 6, **characterised in that** the source comprises a stability circuit that stabilizes a pulse-repetition rate of the source.

10. The system of claim 6, **characterised in that** the radiation pulses are polarized before being directed to the target, and the processor is further configured to detect polarization information contained within the scattered radiation pulses.

11. The system of claim 6, **characterised in that** the radiation pulses are shaped by a pulse shaping encoder before being directed to the target.

## Patentansprüche

1. Verfahren zum Nachweisen von ultrakurzen multispektralen Strahlungsimpulsen, die von einem Ziel zurückgestreut werden, wobei das Verfahren folgendes umfasst:
- Erzeugen einer Impulsfolge (200) kohärenter Strahlungsimpulse (115, 120), wobei die kohärente Strahlungsimpulsfolge verwendet wird, um Bezugs- und Sendeimpulse zu erzeugen;
- Ausrichten von ein oder mehr ausgesendeten Impulsen auf ein Ziel (125);
- Empfangen von Streulichtimpulsen (130), die durch die Streuung von ausgesendeten Impulsen durch das Ziel erzeugt werden; und
- Überlagern jedes einzelnen Streulichtimpulses mit einem der Bezugsimpulse (120), um ein Interferogramm mit einem Streifenmuster zu bilden; und
- **dadurch gekennzeichnet, dass** die kohärenten Strahlungsimpulse durch einen Laser (905) mit einer Spektralbreite von mindestens einer Oktave generiert werden; und
- dass der Bezugsimpuls, der verwendet wird, um ein Interferogramm zu bilden und der ausgesendete Impuls, der verwendet wird um den Streulichtimpuls zu erzeugen, der wiederum verwendet wird, um dieses Interferogramm zu bilden, unter Anwendung unterschiedlicher Strahlungsimpulse innerhalb der Impulsfolge kohärenter Strahlungsimpulse erzeugt wurden; und
- Ermitteln einer Intensität und einer Phase für die Streulichtimpulse aus den Streifenmustern des Interferogramms;
- Ermitteln eines Zielmerkmals, basierend auf der Intensität und der Phase der Streulichtimpulse;
- Vergleichen des Zielmerkmals mit einer Datenbank von Zielmerkmalen; und
- Einordnen des Ziels, basierend auf dem Vergleich des Zielmerkmals mit der Datenbank von Zielmerkmalen.

2. Verfahren nach Anspruch 1, **dadurch gekennzeichnet, dass** sie außerdem die Verzögerung der Bezugsimpulse von weniger als oder gleich einer Impulsfolgedauer vor der Überlagerung der Streulichtimpulse mit den Bezugsimpulsen umfasst.

3. Verfahren nach Anspruch 1, **dadurch gekennzeichnet, dass** es sich bei den ausgesendeten Impulsen um Ultrabreitband-Laserlichtimpulse handelt.

4. Verfahren nach Anspruch 1, **dadurch gekennzeichnet**, das es außerdem das Ermitteln von Polarisationsinformationen, die in den Streulichtimpulsen enthalten sind, umfasst.

5. Verfahren nach Anspruch 1, **dadurch gekennzeichnet, dass** das Aussenden die Formung von ein oder mehr ausgesendeten Impulsen mit einem Impulsformungs-Decoder umfasst.

6. System (100), das so konfiguriert ist, dass es ultrakurze multispektrale Strahlungsimpulse aussenden und empfangen kann, wobei das System folgendes umfasst:
- eine Quelle (105), die konfiguriert ist, um eine Impulsfolge (200) kohärenter Strahlungsimpulse (115, 120) zu erzeugen;
- einen Empfänger(110), der konfiguriert ist, um die Streulichtimpulse (130), die durch Streuung der Lichtimpulse durch ein Ziel (125) erzeugt werden, aufzunehmen; und
- einen Interferometer, der konfiguriert ist, um jeden Streulichtimpuls mit einem Bezugsimpuls (120) zu überlagern, um ein Interferogramm mit einem Streifenmuster zu bilden; und
**dadurch gekennzeichnet, dass** die Quelle (105) einen Laser (905) mit einer Spektralbreite von mindestens einer Oktave umfasst; und
- der Bezugspuls, der für die Bildung eines Interferogramms und der Streulichtimpuls, der für die Bildung dieses Interferogramms verwendet wird, durch Verwendung unterschiedlicher Lichtimpulse innerhalb der Impulsfolge erzeugt werden;
und
- einem Prozessor, der konfiguriert ist, um die Intensität und eine Phase des Streuimpulses aus einem Streifenmuster des Interferogramms zu bestimmen;
- um ein Zielmerkmal, basierend auf der Intensität und der Phase der Streuimpulse zu ermitteln;
- ein Zielmerkmal mit einer Datenbank von Zielmerkmalen zu vergleichen; und das Ziel, basierend auf dem Vergleich des Zielmerkmals mit der Datenbank von Zielmerkmalen, einzuordnen.

7. System nach Anspruch 6, **dadurch gekennzeichnet, dass** es außerdem eine Verzögerung umfasst, die konfiguriert ist, um die Bezugsimpulse um weniger als oder um einer Impulsfolgedauer zu verzögern, wobei die verzögerten Bezugsimpulse mit den Streulichtimpulsen überlagert werden.

8. System nach Anspruch 6, **dadurch gekennzeichnet, dass** es sich bei den ausgesendeten Lichtimpulsen um Ultrabreitband-Laserlichtimpulse handelt.

9. System nach Anspruch 6, **dadurch gekennzeichnet, dass** die Quelle einen Stabilitätskreis umfasst, der eine Pulswiederholrate der Quelle stabilisiert.

10. System nach Anspruch 6, **dadurch gekennzeichnet, dass** die Lichtimpulse polarisiert werden, bevor sie auf das Ziel gerichtet werden und der Prozessor außerdem konfiguriert ist, um die Polarisationsinformationen zu erfassen, die in den Streulichtimpulsen enthalten sind.

11. System nach Anspruch 6, **dadurch gekennzeichnet, dass** die Lichtimpulse mit einem Impulsformungs-Decoder geformt werden, bevor sie auf das Ziel gerichtet werden.

## Revendications

1. Procédé de détection d'impulsions multi-spectrales ultracourtes de rayonnement dispersées par une cible, le procédé comprenant les étapes suivantes :
- générer un train (200) d'impulsions de rayonnement cohérent (115, 120), le train d'impulsions de rayonnement cohérent étant utilisé pour générer des impulsions de référence et des impulsions émises ;
- diriger au moins une des impulsions émises vers une cible (125) ;
- recevoir des impulsions de rayonnement dispersées (130) produites par dispersion des impulsions émises par la cible ; et
- faire interférer chaque impulsion de rayonnement dispersée avec l'une des impulsions de référence (120) pour former un interférogramme ayant un motif de franges ; et
- **caractérisé en ce que** les impulsions de rayonnement cohérent sont générées par un laser (905) ayant une largeur spectrale d'au moins une octave ; et
- l'une des impulsions de référence utilisées pour former un interférogramme et l'impulsion émise utilisée pour produire l'impulsion de rayonnement dispersée utilisée pour former cet interférogramme ont été générées à l'aide de différentes impulsions de rayonnement dans le train d'impulsions de rayonnement cohérent ; et
- déterminer une intensité et une phase des impulsions de rayonnement dispersées à partir des motifs de franges de l'interférogramme ;
- déterminer une signature cible sur la base de l'intensité et de la phase des impulsions de rayonnement dispersées ;
- comparer la signature cible à une base de données de signatures cibles ; et
- classer la cible en fonction de la comparaison de la signature cible à la base de données de signatures cibles.

2. Procédé selon la revendication 1, **caractérisé en ce qu'**il comprend en outre le retardement des impulsions de référence avec un retard inférieur ou égal à la période du train d'impulsions avant l'interférence des impulsions dispersées avec les impulsions de référence.

3. Procédé selon la revendication 1, **caractérisé en ce que** les impulsions émises sont des impulsions laser de rayonnement à largeur de bande ultralarge.

4. Procédé selon la revendication 1, **caractérisé en ce qu'**il comprend en outre la détection d'informations de polarisation contenues dans les impulsions de rayonnement dispersées.

5. Procédé selon la revendication 1, **caractérisé en ce que** l'émission comprend la mise en forme d'au moins une impulsion émise avec un codeur de mise en forme d'impulsions.

6. Système (100) conçu pour émettre et recevoir des impulsions de rayonnement multi-spectrales ultra-courtes, le système comprenant :
- une source (105) conçue pour générer un train (200) d'impulsions de rayonnement cohérent (115, 120) ;
- un récepteur (110) conçu pour recevoir des impulsions de rayonnement dispersées (130) produites par dispersion des impulsions de rayonnement par une cible (125) ; et
- un interféromètre conçu pour faire interférer chaque impulsion de rayonnement dispersée avec une impulsion de référence (120) pour former un interférogramme ayant un motif de franges ; et
- **caractérisé en ce que** la source (105) comprend un laser (905) ayant une largeur spectrale d'au moins une octave ; et
- l'impulsion de référence utilisée pour former un interférogramme et l'impulsion de rayonnement dispersée utilisée pour former cet interférogramme sont générées à l'aide de différentes impulsions de rayonnement dans le train d'impulsions ;
- un processeur conçu pour déterminer une intensité et une phase des impulsions dispersées à partir du motif de franges de l'interférogramme ;
- pour déterminer une signature cible sur la base de l'intensité et de la phase des impulsions dispersées ;
- pour comparer la signature cible avec une base de données de signatures cibles ; et
- pour classer la cible en fonction de la comparaison de la signature cible avec la base de données de signatures cibles.

7. Système selon la revendication 6, **caractérisé en ce qu'**il comprend en outre un retard prévu pour retarder les impulsions de référence, qui est inférieur ou égal à la période du train d'impulsions, les impulsions de référence retardées interférant avec les impulsions de rayonnement dispersées.

8. Système selon la revendication 6, **caractérisé en ce que** les impulsions de rayonnement émises sont des impulsions laser à largeur de bande ultralarge.

9. Système selon la revendication 6, **caractérisé en ce que** la source comporte un circuit de stabilité qui stabilise la fréquence de répétition d'impulsions de la source.

10. Système selon la revendication 6, **caractérisé en ce que** les impulsions de rayonnement sont polarisées avant d'être dirigées vers la cible, et **en ce que** le processeur est en outre conçu pour détecter des informations de polarisation contenues dans les impulsions de rayonnement dispersées.

11. Système selon la revendication 6, **caractérisé en ce que** les impulsions de rayonnement sont mises en forme par un codeur de mise en forme d'impulsions avant d'être dirigées vers la cible.
